# FASCICULE DE BREVET EUROPEEN

(11) **EP 3 688 236 B1**
(45) Date de publication et mention de la délivrance du brevet: **10.11.2021**
(21) Numéro de dépôt: 18774052.7
(22) Date de dépôt: 26.09.2018
(51) Int. Cl.: E02F 9/02, E02F 9/22, B60G 9/02

(54) **SYSTÈME DE STABILISATION POUR UN ENGIN À ROUES ÉQUIPÉ D'UN BRAS PORTEUR DE CHARGE, ET ENGIN À ROUES ÉQUIPÉ D'UN BRAS PORTEUR DE CHARGE, INCLUANT CE SYSTÈME DE STABILISATION**
STABILISIERUNGSSYSTEM FÜR EIN MIT EINEM LASTTRAGARM AUSGESTATTETES RADFAHRZEUG UND MIT EINEM LASTTRAGARM AUSGESTATTETES RADFAHRZEUG MIT DIESEM STABILISIERUNGSSYSTEM
STABILISATION SYSTEM FOR A WHEELED VEHICLE EQUIPPED WITH A LOAD-CARRYING ARM, AND WHEELED VEHICLE EQUIPPED WITH A LOAD-CARRYING ARM, INCLUDING THIS STABILISATION SYSTEM

(30) Priorité: 27.09.2017 FR 1758975
(43) Date de publication de la demande: 05.08.2020
(73) Titulaire: Eliatis, 38430 Moirans (FR)
(72) Inventeur: PERRIN, Jean-Luc, 38340 Voreppe (FR)
(74) Mandataire: LLR
(86) Numéro de dépôt international: PCT/EP2018/076194
(87) Numéro de publication internationale: WO 2019/063654

(56) Documents cités:
- FR-A- 1 406 770
- US-A- 5 180 028
- US-A- 5 639 119

## Description

### 1. Domaine de l'invention

La présente invention concerne un système de stabilisation pour un engin à roues équipé d'un bras porteur de charge, et l'engin à roues équipé d'un bras porteur de charge, incluant ce système de stabilisation.

Cet engin peut être de tout type d'engin équipé d'un bras portant une charge ou destiné à porter une charge, ce bras étant susceptible d'être placé dans une position d'extension latérale par rapport à l'engin. Cette extension est telle qu'elle est susceptible de générer un moment de basculement pouvant risquer de conduire à un renversement de l'engin, ou tout au moins à soulever une roue de l'engin, causant une instabilité de l'engin selon une ligne passant par cette roue et par la roue diagonalement opposée.

L'engin peut notamment être une épareuse, c'est-à-dire une machine à couper des taillis ou à faucher de l'herbe sur un talus le long d'une voie de circulation ; la charge portée par le bras est alors l'outil de coupe ou de fauchage.

Un engin à roues équipé d'un bras porteur de charge peut, dans certaines situations, se trouver déséquilibré au point de risquer de se renverser, du fait de la charge portée par le bras et du déport de ce bras par rapport à l'engin, et en particulier lors du franchissement d'un accident du terrain conduisant à surélever une roue de l'engin située du côté opposé au côté sur lequel s'étend le bras.

Dans la description ci-après, il va être distingué une roue de l'engin située sur le côté latéral de l'engin opposé au côté latéral de l'engin sur lequel s'étend le bras, et une roue de l'engin située sur le même côté latéral de l'engin que celui sur lequel s'étend le bras ; par simplification de l'expression, la première roue citée sera définie comme étant "du côté opposé au bras" et la deuxième roue citée sera définie comme étant "du côté du bras". Il en sera de même pour les vérins dits "de compensation" décrits plus loin, l'un de ces vérins étant situé "à l'opposé du bras" et l'autre étant situé "du côté du bras".

### 2. Art antérieur

Les engins existants sont dédiés à l'accomplissement d'un type de travail précis et sont conçus en conséquence, de façon à traiter au mieux le risque de renversement susceptible de se poser sur l'engin concerné. Cette spécialisation conduit cependant à devoir disposer de plusieurs types d'engins, ce qui est bien entendu problématique d'un point de vue économique, en termes d'encombrement, d'entretien, etc.

Ce même problème de risque de renversement conduit à ce que certains engins existants, outre leur spécialisation, aient des performances limitées en termes de déport possible du bras et/ou en termes de type ou de poids des charges qu'il est possible de monter sur le bras ou de transporter avec ce bras.

Il n'existe pas d'engin polyvalent, dont le bras serait apte à être utilisé pour accomplir des travaux différents, en particulier pour recevoir des outils différents, avec des performances intéressantes en termes de déport possible du bras et/ou de type ou de poids des charges qu'il est possible de monter sur le bras, et sur lequel le problème du risque de renversement de l'engin pourrait être traité de façon adaptable au type de travail à accomplir et aux types d'outils susceptibles d'être montés sur le bras.

La présente invention a donc pour objectif de remédier à cette lacune.

Il est certes connu de stabiliser un engin au moyen de béquilles ; ces béquilles sont cependant utilisables uniquement de façon statique, alors que l'engin est à l'arrêt, et ne sont donc pas adaptées à un engin devant progresser sur un terrain ou une voie de circulation pour l'accomplissement du travail requis. De plus, ces béquilles sont inutilisables sur un terrain possiblement accidenté ou meuble comme cela peut être le cas d'engins de manutention de grumes de bois, travaillant en forêt.

Les documents FR 1 406 770 A, US 5,180,028 A et US 5,639,119 A divulguent divers systèmes conformes à l'art antérieur, ne permettant pas de combler la lacune précitée. Le préambule de la revendication indépendante est basé sur le contenu du document FR 1 406 770 A.

### 3. Exposé de l'invention

Le système de stabilisation concerné est donc destiné à équiper un engin à roues incluant un bras porteur de charge, l'engin comprenant un châssis, dit ci-après "châssis principal", sur lequel au moins un essieu porteur de roues est monté oscillant autour d'un palier ; un vérin, dit ci-après "vérin de flèche", est associé au bras porteur de charge pour régler l'inclinaison de ce bras par rapport à ce châssis principal.

Selon l'invention, le système de stabilisation comprend :
- un châssis oscillant apte à être relié audit essieu en deux points de liaison situés à distance dudit palier, de part et d'autre de ce palier et de façon symétrique à l'axe de celui-ci ; cette liaison de ce châssis oscillant à l'essieu fait que ce châssis oscille avec l'essieu ; ledit bras porteur de charge est destiné à être monté sur ce châssis oscillant ;
- deux vérins, dits ci-après "vérins de compensation", dont un relie un premier desdits points de liaison audit châssis principal et l'autre relie le deuxième desdits points de liaison audit châssis principal ; un premier de ces vérins de compensation est situé à l'opposé du bras et le deuxième de ces vérins de compensation est situé du côté du bras ;
- un distributeur proportionnel ; la chambre supérieure du premier vérin de compensation et la chambre inférieure du deuxième vérin de compensation sont reliées par une même première conduite à un orifice situé sur un premier côté du tiroir de ce distributeur, tandis que la chambre inférieure du premier vérin de compensation et la chambre supérieure du deuxième vérin de compensation sont reliées par une même deuxième conduite à un autre orifice situé sur le premier côté du tiroir de ce distributeur ; la chambre inférieure du vérin de flèche est reliée à un orifice situé sur un deuxième côté du tiroir du distributeur, opposé audit premier côté, et un autre orifice de ce tiroir situé sur ce deuxième côté est relié à un réservoir de fluide ; le tiroir du distributeur comprend une première case qui, dans une première position du tiroir, met les chambres supérieures et inférieures des vérins de compensation en communication avec le réservoir de fluide et met la chambre inférieure du vérin de flèche en arrêt d'écoulement de fluide ; le tiroir comprend une deuxième case qui, dans une deuxième position du tiroir, met la chambre supérieure du premier vérin de compensation et la chambre inférieure du deuxième vérin de compensation en communication avec la chambre inférieure du vérin de flèche et met simultanément la chambre inférieure du premier vérin de compensation et la chambre supérieure du deuxième vérin de compensation en communication avec le réservoir de fluide ; le distributeur est associé à des moyens d'actionnement pilotés permettant de maintenir normalement le tiroir dans ladite première position, d'amener progressivement ce tiroir de ladite première position à ladite deuxième position, et de ramener progressivement ce tiroir de ladite deuxième position à ladite première position ;
- un détecteur d'une inclinaison de l'essieu, détectant une inclinaison de l'essieu selon laquelle la roue de l'engin opposée au bras est surélevée ; et
- un calculateur relié d'une part à ce détecteur d'inclinaison et d'autre part auxdits moyens d'actionnement pilotés du tiroir du distributeur ; en cas d'inclinaison de l'essieu tendant à surélever la roue située du côté opposé au bras, le calculateur pilote ces moyens d'actionnement de façon à commander le passage progressif du tiroir du distributeur de ladite première position à ladite deuxième position selon l'inclinaison détectée de l'essieu.

Il sera compris que par les expressions "chambre supérieure" et "chambre inférieure" de l'un ou l'autre desdits vérins, il est désigné les parties de la chambre du vérin qui sont situées de part et d'autre du piston de ce vérin ; la chambre supérieure est celle qui est la plus éloignée du sol lorsque l'engin est posé sur le sol, et inversement s'agissant de la chambre inférieure.

Par distributeur "proportionnel", on entend un distributeur dont le tiroir comprend des conduits usinés en biseau de sorte que le déplacement du tiroir réalise une variation progressive du débit de fluide de commande des vérins au travers de ce tiroir ; un tel distributeur est connu en lui-même.

En l'absence d'inclinaison de l'essieu, le tiroir du distributeur est maintenu dans ladite première position, dans laquelle le fluide de commande des vérins circule librement au travers du tiroir du distributeur, de sorte que les vérins de compensation n'ont aucune action sur l'essieu ; la chambre inférieure du vérin de flèche est alimentée par une source de fluide indépendante, afin de commander l'inclinaison du bras de façon adéquate selon le travail à réaliser.

En cas d'inclinaison de l'essieu par rapport au châssis principal, par exemple en cas de franchissement d'un accident du terrain conduisant à surélever la roue située à l'opposé du bras, donc située du côté du premier vérin de compensation, le capteur d'inclinaison transmet au calculateur l'information de cette inclinaison et le calculateur commande lesdits moyens d'actionnement du distributeur de façon à déplacer progressivement le tiroir de ce distributeur de ladite première position vers ladite deuxième position, selon le degré d'inclinaison détecté ; le fluide sous pression contenu dans la chambre inférieure du vérin de flèche est alors alimenté sous pression, au travers du distributeur, vers la chambre supérieure du premier vérin de compensation et vers la chambre inférieure du deuxième vérin de compensation, amenant ainsi ces vérins à exercer sur l'essieu un couple tendant à ramener l'essieu vers une position dans laquelle la roue surélevée est ramenée en contact avec le sol, supprimant ainsi l'instabilité de l'engin selon la diagonale allant de cette roue surélevée à la roue opposée située sur l'autre essieu de l'engin ; l'échappement du fluide hors de la chambre inférieure du vérin de flèche conduit à une rentrée de la tige de ce vérin, ce qui contribue à compenser rapidement l'instabilité de l'engin.

Une fois l'accident de terrain franchi, le retour de l'essieu dans une position de non inclinaison conduit le calculateur à commander lesdits moyens d'actionnement de façon à faire retourner progressivement le tiroir du distributeur dans ladite première position.

En cas d'inclinaison de l'essieu par rapport au châssis principal, par exemple en cas d'accident du terrain, conduisant à surélever la roue située du côté du bras, donc située du côté du deuxième vérin de compensation, le calculateur n'agit pas sur les moyens d'actionnement du tiroir du distributeur, de sorte que ce tiroir reste dans ladite première position.

L'invention fournit par conséquent un système de stabilisation permettant de traiter en temps réel le risque de renversement de l'engin par une action de compensation sur l'inclinaison de l'essieu ; ce traitement est mis en oeuvre quel que soit le type de travail à accomplir et les types d'outils susceptibles d'être montés sur le bras, et rend ainsi l'engin équipé de ce système tout-à-fait polyvalent.

L'engin peut être conçu de telle sorte que le bras qu'il comprend soit prévu pour agir uniquement depuis un même côté latéral de l'engin. De préférence, toutefois, l'engin est conçu de telle sorte que ledit bras porteur de charge soit monté sur un pivot d'axe vertical permettant d'amener ce bras sur l'un ou l'autre des côtés latéraux de l'engin, et que, en conséquence, ce bras soit à même de travailler sur l'un ou l'autre des côtés latéraux de l'engin ; dans ce cas,
- le système de stabilisation comprend un capteur de détection de la position angulaire du bras par rapport à l'engin, permettant de déterminer sur quel côté latéral de l'engin se trouve le bras, ce capteur étant relié au calculateur ;
- le tiroir du distributeur comprend une troisième case permettant des mises en communication des vérins de compensation avec la chambre inférieure du vérin de flèche et avec le réservoir de fluide qui sont inversées par rapport aux mises en communication permises par ladite deuxième case ; ladite deuxième case est amenée en position active lorsque le bras est placé sur un premier côté latéral de l'engin et ladite troisième case est amenée en position active lorsque le bras est placé sur un deuxième côté latéral de l'engin, opposé au premier côté latéral de l'engin ; ces deuxième et troisième cases permettent donc de toujours mettre la chambre supérieure du vérin de compensation situé à l'opposé du bras et la chambre inférieure du vérin de compensation situé du côté du bras en communication avec la chambre inférieure du vérin de flèche, et de mettre simultanément les autres chambres de ces vérins de compensation à l'échappement quel que soit le côté latéral de l'engin sur lequel se trouve le bras.

Le même effet que précédemment, d'exercice sur l'essieu d'un couple tendant à incliner cet essieu de façon à ramener la roue surélevée en contact avec le sol, est ainsi obtenu quel que soit le côté latéral de l'engin sur lequel se trouve le bras.

### De préférence,

- l'engin est conçu de telle sorte que ledit bras soit interchangeable, et/ou que la charge susceptible d'être portée par ce bras, par exemple un outil, soit interchangeable par rapport au bras ;
- le système de stabilisation comprend un premier capteur de pression, présent sur ladite conduite reliant au distributeur le vérin de flèche du bras utilisé, un deuxième capteur de pression, présent sur ladite première conduite reliant les vérins de compensation au distributeur, et un troisième capteur de pression, présent sur ladite deuxième conduite reliant les vérins de compensation au distributeur, ces premier à troisième capteurs étant reliés au calculateur ; et
- ce calculateur comprend une fonction d'auto-apprentissage permettant d'établir une valeur de pression de consigne, nécessaire pour stabiliser l'engin en fonction du type de bras montés sur l'engin, et donc en fonction du type de vérin de flèche propre à ce bras, ou en fonction de la charge portée par le bras.

En pratique, une fois le bras et/ou la charge (en particulier un outil) mis en place sur l'engin, le bras est déployé au maximum alors que l'engin est à plat puis est actionné de façon à soulever la charge, ce qui conduit à mettre le fluide du vérin de flèche sous pression et ce qui conduit l'une des roues de l'engin à se soulever du sol ; la fonction d'auto-apprentissage du calculateur est alors activée et le distributeur est commandé par le calculateur de façon à alimenter progressivement les vérins de compensation afin de ramener la roue surélevée en contact avec le sol ; lorsque cet état de re-stabilisation de l'engin sur ses roues est atteint, lesdits deuxième et troisième capteurs détectent la pression de fluide qu'il est nécessaire d'alimenter dans les vérins de compensation pour obtenir cet état, et cette valeur de pression spécifique, adaptée au type de bras spécifique utilisé, et/ou adaptée à la masse de la charge portée par le bras, est enregistrée par le calculateur. Cette valeur de pression spécifique est ensuite utilisée comme valeur de consigne maximum par le calculateur pour piloter le distributeur proportionnel de façon à réaliser la compensation d'inclinaison de l'essieu adaptée au type de bras spécifique ou à la masse de la charge portée par le bras. Dans ce cas, le calculateur va piloter les bobines du distributeur pour alimenter les vérins de compensation en vue d'atteindre une pression proportionnelle à la pression du vérin de flèche. Le calculateur maintiendra cette proportion en établissant une recopie en temps réel.

L'engin équipé du système de stabilisation ainsi conçu est donc apte à recevoir divers types de bras interchangeables, ayant des vérins de flèche propres à eux, et/ou des charges ayant des masses différentes, et le système de stabilisation est apte à s'auto-étalonner en fonction de la pression qui existe dans le vérin de flèche propre au bras utilisé, lorsque la charge est soulevée.

L'invention sera bien comprise, et d'autres caractéristiques et avantages de celle-ci apparaîtront, en référence au dessin annexé, représentant, à titre d'exemples non limitatifs, un engin équipé du système de stabilisation concerné, ce système étant selon plusieurs formes de réalisation possibles.

### 4. Description des figures

La figure 1 est une vue schématique d'un engin à quatre roues, par l'arrière de cet engin, et des principaux éléments constitutifs du système de stabilisation selon une première forme de réalisation, l'engin étant dans une position neutre, de non compensation d'inclinaison de l'essieu arrière de l'engin ;
la figure 2 est une vue de l'engin et du système de stabilisation similaire à la figure 1 en cas de surélévation de la roue opposée au bras ;
la figure 3 est une vue de l'engin et du système de stabilisation similaire à la figure 1 en cas de surélévation de la roue située du côté du bras ;
la figure 4 est une vue similaire à la figure 1 d'un engin sur lequel le bras peut être placé sur l'un ou l'autre des côtés latéraux de l'engin, et du système de stabilisation selon une deuxième forme de réalisation, l'engin étant représenté dans une situation de surélévation de la roue située du côté du bras ;
la figure 5 est une vue de l'engin similaire à la figure 4, dans une situation de surélévation de la roue située du côté opposé au bras et alors que ce bras est placé sur un premier côté de l'engin ;
la figure 6 est une vue de l'engin similaire à la figure 5, dans une situation de surélévation de la roue située du côté opposé au bras et alors que ce bras est placé sur un deuxième côté de l'engin, opposé au premier côté ; et
la figure 7 est une vue de l'engin similaire à la figure 4, l'engin comprenant un système de stabilisation selon une troisième forme de réalisation.

### 5. Description des modes de réalisation préférés

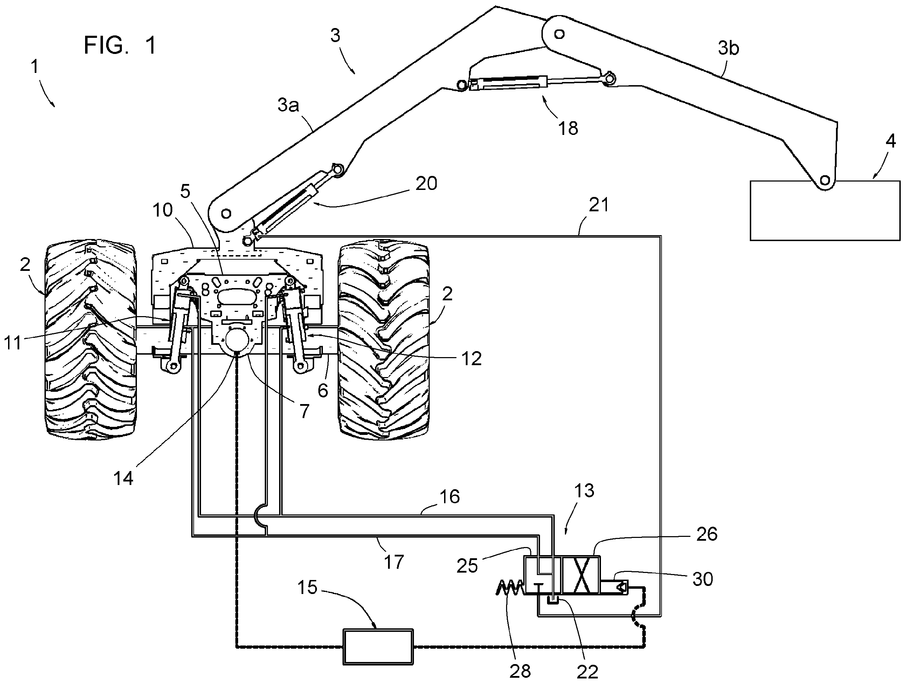

Les figures 1 à 3 représentent un engin 1 à roues arrière 2, comportant un bras 3 apte à porter une charge 4. Cette charge 4 peut être de tout type ; il peut notamment s'agir d'un outil de coupe de taillis ou de fauchage de l'herbe présente sur un talus le long d'une voie de circulation.

L'engin 1 comprend un châssis 5, dit ci-après "châssis principal", sur lequel un essieu 6 porteur des deux roues 2 est monté oscillant autour d'un palier 7. Ce châssis 5 porte également un essieu avant porteur de deux roues avant, non visibles sur les figures.

L'engin 1 est équipé d'un système de stabilisation comprenant un châssis oscillant 10, un premier vérin 11, un deuxième vérin 12, un distributeur proportionnel 13, un détecteur 14 d'inclinaison de l'essieu 6 et un calculateur 15.

Le châssis oscillant 10 a, dans une direction transversale à l'axe longitudinal de l'engin 1, une dimension telle qu'il est apte à être relié à l'essieu 6 en deux points de liaison à cet essieu situés de part et d'autre du palier 7, à distance de ce palier et situés de façon symétriques par rapport à l'axe de ce palier.

La liaison de ce châssis oscillant 10 à l'essieu 6 fait que ce châssis oscille avec cet essieu en cas de rencontre avec un accident de terrain tel que désigné par la référence 100 sur les figures.

L'un des points de liaison est relié de façon pivotante à la tige de piston du premier vérin 11 et le corps de ce premier vérin 11 est relié de façon pivotante au châssis principal 5 ; l'autre de ces points de liaison est relié de façon pivotante à la tige de piston du deuxième vérin 12 et le corps de ce deuxième vérin 12 est également relié de façon pivotante au châssis principal 5. Ces vérins 11, 12 sont dits ci-après "vérins de compensation", en ce sens qu'ils permettent de "compenser" l'inclinaison de l'essieu 6 pour ramener la roue 2 opposée au bras en contact avec le sol lorsque cette roue vient en surélévation par rapport au sol à l'occasion du franchissement de l'accident de terrain 100, cette surélévation résultant de la combinaison de ce franchissement, du déport du bras 3 et de la masse de la charge 4.

Il apparaît que les chambres supérieures et les chambres inférieures des vérins de compensation 11, 12 sont reliées au distributeur 13, sur un même premier côté du tiroir de ce distributeur ; la chambre supérieure du vérin 11 et la chambre inférieure du vérin 12 sont reliées à un orifice de ce tiroir par une conduite 16, tandis que la chambre inférieure du vérin 11 et la chambre supérieure du vérin 12 sont reliées à un autre orifice de ce tiroir, par une conduite 17.

Le bras 3 inclut une embase montée pivotante sur une paroi supérieure du châssis oscillant 10 ; dans la forme de réalisation montrée sur les figures 1 à 3, cette embase pivote sur un secteur maximal de 90° par rapport au châssis oscillant 10, de part et d'autre d'une position latérale médiane, de telle sorte que le bras 3 reste toujours sur un même côté latéral de l'engin 1 (le côté droit de cet engin tel que cela est représenté sur ces figures) ou qu'il peut être positionné dans l'axe longitudinal de l'engin 1.

Ce bras 3 présente, également dans cet exemple de réalisation, une flèche 3a reliée de façon pivotante à ladite embase du bras, et une partie d'extrémité libre 3b apte à recevoir la charge 4. Cette partie d'extrémité libre 3b est reliée de façon pivotante à la flèche 3a et est apte à être actionnée par rapport à celle-ci au moyen d'un vérin 18.

L'inclinaison de la flèche 3a par rapport au châssis oscillant 10 est réalisée au moyen d'un vérin 20, dit ci-après "vérin de flèche", dont la chambre inférieure est reliée au distributeur 13 par une conduite 21, en un orifice situé sur un deuxième côté du tiroir de ce distributeur, opposé audit premier côté. Un autre orifice de ce tiroir, sur ce deuxième côté est relié à un réservoir 22 de fluide d'actionnement des vérins 11 et 12.

La chambre inférieure du vérin 20 est par ailleurs reliée à une source de fluide d'actionnement, indépendante, permettant de réaliser, en combinaison avec le vérin 18, le déploiement du bras 3.

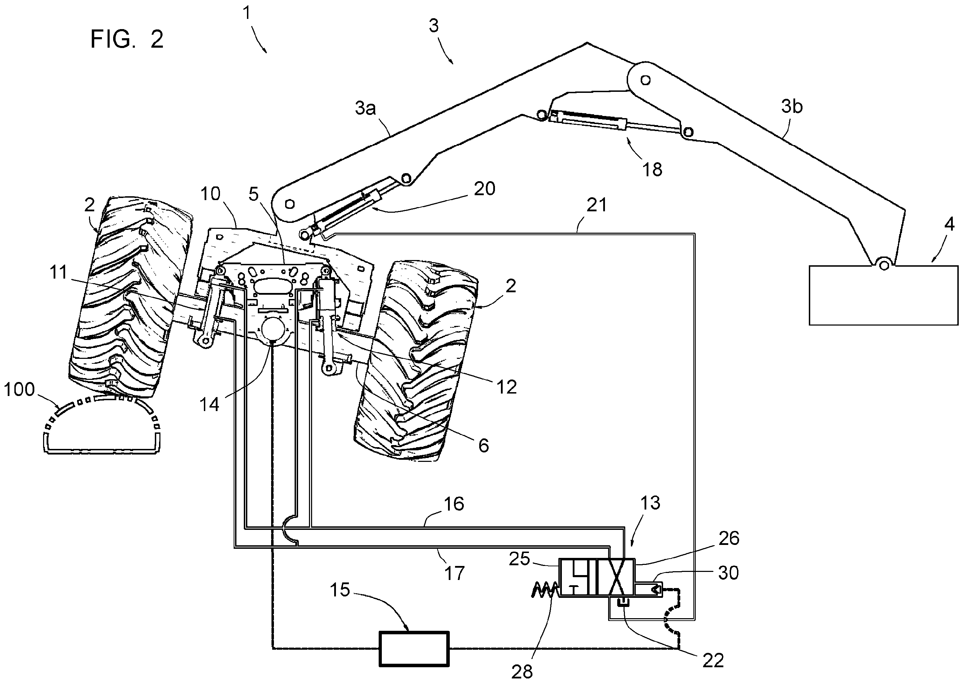

Le distributeur 13 est de type connu, notamment celui commercialisé par la société Fluid System sous la référence 2149-90-A. Son tiroir comprend une première case 25 qui, dans une première position du tiroir montrée sur la figure 1, met les chambres supérieures et inférieures des vérins 11, 12 à l'échappement et met la chambre inférieure du vérin de flèche 20 en arrêt d'écoulement de fluide ; le tiroir comprend une deuxième case 26 qui, dans la deuxième position du tiroir visible sur la figure 2, met la chambre supérieure du vérin 11 et la chambre inférieure du vérin 12 en communication avec la chambre inférieure du vérin 20, et met simultanément la chambre inférieure du vérin 11 et la chambre supérieure du vérin 12 à l'échappement.

Le qualificatif de "proportionnel" pour ce distributeur 13 signifie que le tiroir comprend des conduits usinés en biseau de sorte que le déplacement du tiroir réalise une variation progressive du débit de fluide de commande des vérins 11, 12 au travers de ce tiroir.

Le tiroir du distributeur 13 est sollicité en coulissement, du côté de la case 25, par un ressort 28 et, du côté de la case 26 par une bobine proportionnelle 30 reliée au calculateur 15 et pilotée par ce dernier en fonction de l'angle d'inclinaison de l'essieu 6 détecté par le détecteur 14.

Ce qualificatif de "proportionnel" pour cette bobine 30 signifie que la bobine commande le déplacement du tiroir de façon progressive, selon les instructions de pilotage fournies par le calculateur 15, ces instructions étant elles-mêmes fonction du degré d'inclinaison de l'essieu 6.

Le détecteur 14 est également de type connu ; il est apte à mesurer l'angle de pivotement de l'essieu 6 par rapport au palier 7, donc l'inclinaison de cet essieu.

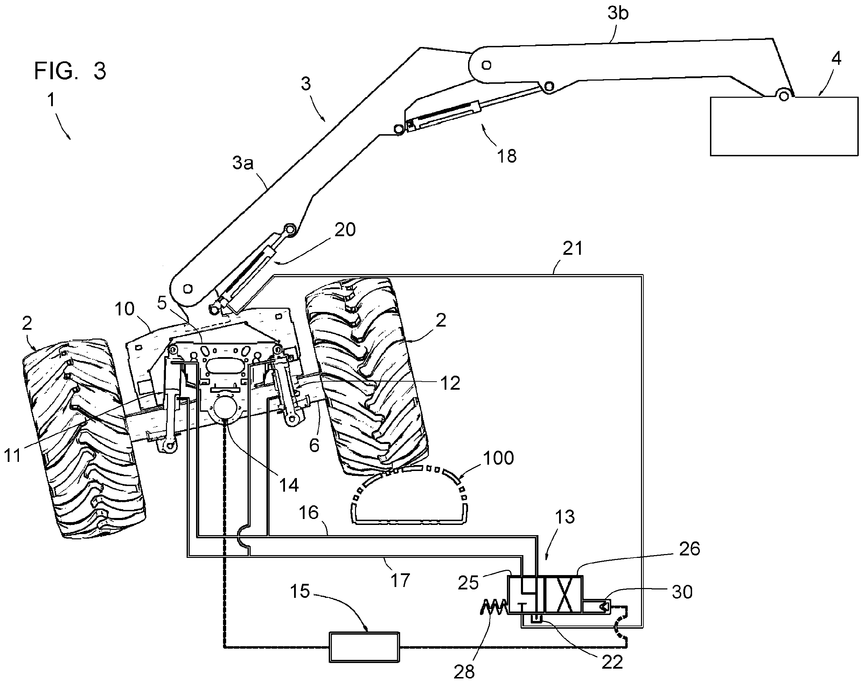

Le calculateur 15, qui est par exemple celui commercialisé sous la marque Danfoss et de référence MC50-010, est relié au détecteur 14 et à la bobine 30 ; il est programmé pour prendre en compte la mesure d'inclinaison de l'essieu 6 lorsque cette inclinaison conduit à une surélévation de la roue 2 située à l'opposé du bras 3, situation visible sur la figure 2, et à agir sur la bobine 30 de façon à déplacer progressivement le tiroir du distributeur 13 depuis ladite première position visible sur la figure 1 vers ladite deuxième position visible sur la figure 2 en fonction de l'inclinaison détectée. Le calculateur 15 est également programmé pour ne pas prendre en compte la mesure d'inclinaison de l'essieu 6 lorsque cette inclinaison de l'essieu conduit à une surélévation de la roue 2 située du côté du bras 3, situation visible sur la figure 3, de sorte que le tiroir du distributeur 13, dans cette situation, reste dans la position montrée sur cette figure 3.

En pratique, comme visible sur la figure 1, en l'absence d'inclinaison de l'essieu 6, le tiroir du distributeur 13 est maintenu dans ladite première position par le ressort 28, de sorte que les vérins de compensation 11 et 12, qui sont reliés à l'échappement, n'ont aucune action sur l'essieu 6 ; la chambre inférieure du vérin 20 de flèche est alimentée par ladite source de fluide indépendante, afin d'incliner le bras 3 de façon adéquate selon le travail à réaliser ; cette inclinaison du bras fait que le fluide présent dans la chambre inférieure de ce vérin 20 est sous pression.

Comme visible sur la figure 2, en cas d'inclinaison de l'essieu 6 par rapport au châssis principal 5, par exemple en cas d'accident du terrain 100, conduisant à surélever la roue 2 située à l'opposé du bras 3, donc située du côté du vérin de compensation 11, le capteur 14 transmet l'information de cette inclinaison au calculateur 15 et le calculateur commande la bobine 30 de façon à déplacer le tiroir du distributeur 13 de ladite première position vers ladite deuxième position, selon le degré d'inclinaison détecté ; le fluide sous pression contenu dans la chambre inférieure du vérin de flèche 20 est alors alimenté sous pression, au travers du distributeur 13, vers la chambre supérieure du vérin 11 et vers la chambre inférieure du vérin 12, amenant ainsi ces vérins à exercer sur l'essieu 6 un couple tendant à compenser l'inclinaison de l'essieu 6 afin de ramener la roue 2 en contact avec le sol, et de supprimer ainsi l'instabilité de l'engin 1 selon la diagonale allant de cette roue 2 à la roue avant située sur le côté opposé de l'engin, et donc équilibrant simultanément le châssis oscillant 10 par rapport au châssis principal 5 ; l'échappement du fluide hors de la chambre inférieure du vérin de flèche 20 conduit à une rentrée de la tige de ce vérin 20, si nécessaire, contribuant au redressement rapide du châssis oscillant 10 par rapport au châssis 5.

Une fois l'accident de terrain 100 franchi, le retour de l'essieu 6 dans une position de non inclinaison conduit le calculateur 15 à commander la bobine 30 de façon à cesser d'agir sur le tiroir à rencontre du ressort 28, permettant à ce ressort 28 de faire retourner le tiroir du distributeur 13 dans ladite première position.

Comme visible sur la figure 3, en cas d'inclinaison de l'essieu 6 par rapport au châssis principal 5, par exemple en cas d'accident du terrain 100, conduisant à surélever la roue 2 située du côté du bras 3, donc située du côté du vérin 12, le calculateur 15 n'agit pas sur la bobine 30, de sorte que le tiroir du distributeur 13 reste dans ladite première position.

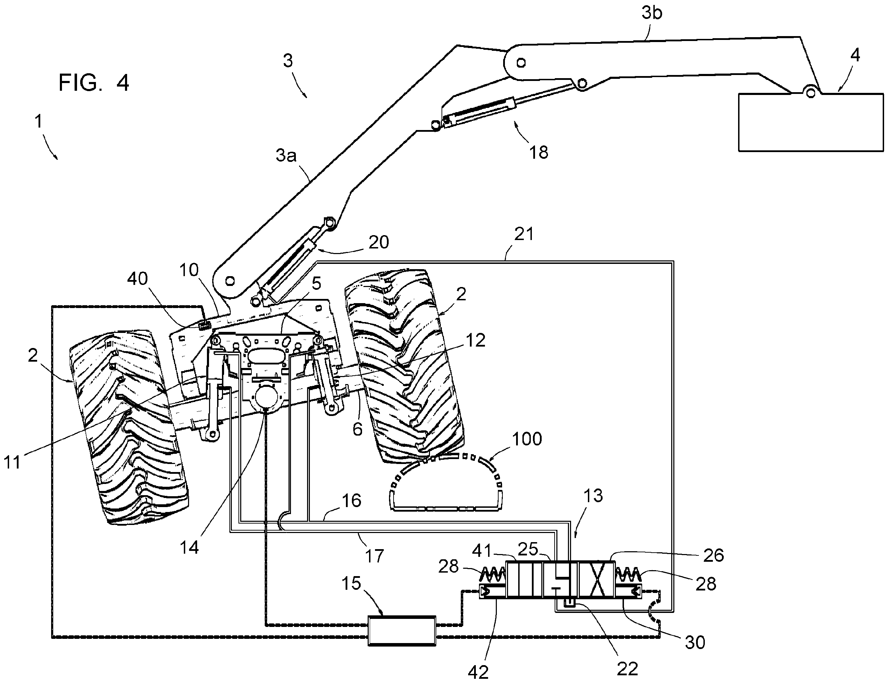

La figure 4 représente un système de stabilisation selon une deuxième forme de réalisation, dans laquelle la plupart des éléments déjà décrits se retrouvent de façon identique ou similaire. Par simplification, ces éléments déjà décrits qui se retrouvent dans cette deuxième forme de réalisation sont désignés par les mêmes références numériques et ne sont pas à nouveau décrits.

Dans ce cas, le bras 3 est pivotant sur un secteur tel qu'il puisse être amené sur l'un ou l'autre des côtés latéraux de l'engin 1.

Le système de stabilisation comprend alors un capteur 40 relié au calculateur 15, de détection de la position angulaire du bras 3 par rapport à l'engin 1, permettant donc de déterminer sur quel côté latéral de l'engin 1 se trouve le bras 3.

Le tiroir du distributeur 13 comprend une troisième case 41, située, par rapport à la case 25, du côté du tiroir opposé à celui sur lequel se trouve la case 26, permettant des mises en communication des vérins de compensation 11, 12 avec la chambre inférieure du vérin de flèche 20 et avec le réservoir de fluide 22 qui sont inversées par rapport aux mises en communication que permet la deuxième case 26.

En outre, dans cette deuxième forme de réalisation, le tiroir 13 est associé à une bobine proportionnelle 42 identique à la bobine 30, située du côté du tiroir opposé à celui sur lequel agit cette bobine 30, et agissant de façon antagoniste à cette dernière. Il est associé en outre à deux ressorts 28, un de chaque côté du tiroir 13, de façon à ramener ce tiroir dans sa position centrale si aucune bobine 30, 42 n'est alimentée ; le distributeur 13 peut ainsi être piloté par le calculateur 15 entre les trois positions possibles du tiroir 13.

Sur la figure 4, la situation représentée est celle dans laquelle c'est la roue 2 située du côté du bras 3 qui est surélevée ; dans cette situation, comme déjà décrit, c'est la case 25 du tiroir du distributeur 13 qui est active.

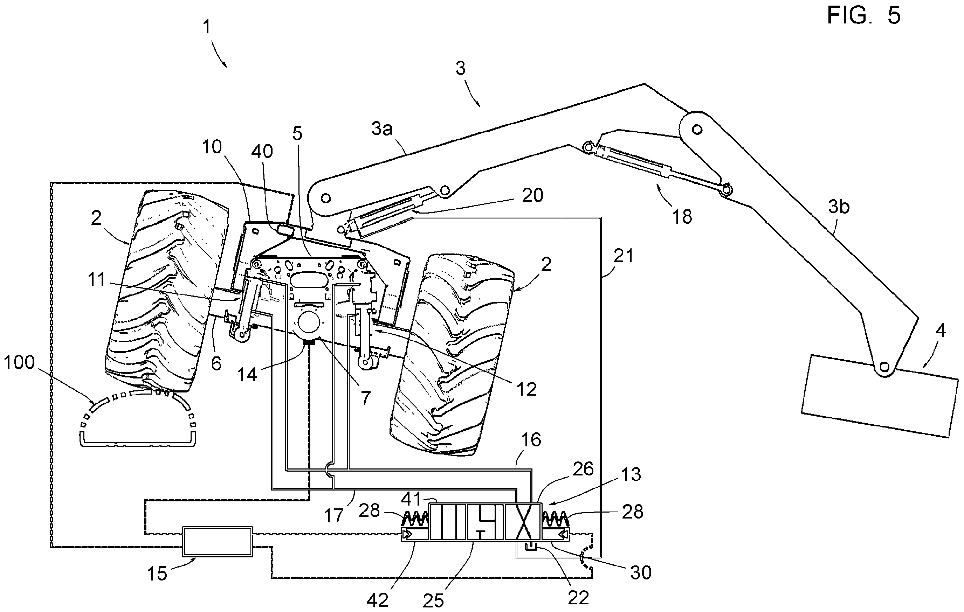

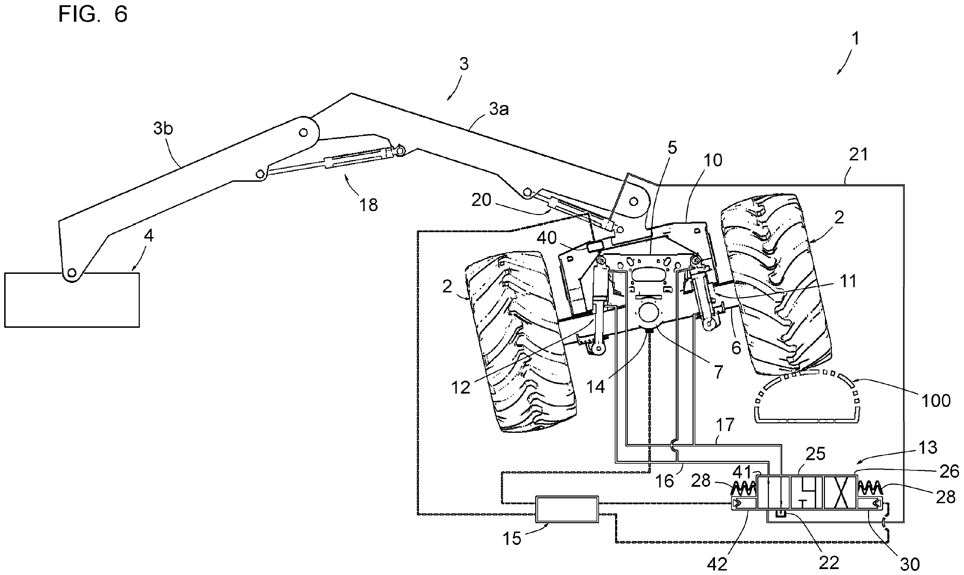

Comme visible sur la figure 5, la case 26 est placée en position active lorsque le bras 3 se trouve sur un premier côté latéral de l'engin 1 (le côté droit de cet engin, tel que cela est représenté sur cette figure 5) ; la figure 6 montre que la troisième case 41 est par contre placée en position active lorsque le bras 3 se trouve sur le deuxième côté latéral de l'engin 1 (sur la gauche de l'engin telle que représenté sur la figure 6), opposé au premier côté. Ces cases 26 et 41 permettent donc de toujours mettre la chambre supérieure du vérin de compensation situé du côté de la roue 2 surélevée se trouvant à l'opposé du bras 3, et la chambre inférieure du vérin de compensation situé du côté du bras 3, en communication avec la chambre inférieure du vérin de flèche 20 et de mettre simultanément les autres chambres de ces vérins de compensation 11, 12 à l'échappement, quelle que soit la position latérale du bras 3 par rapport à l'engin.

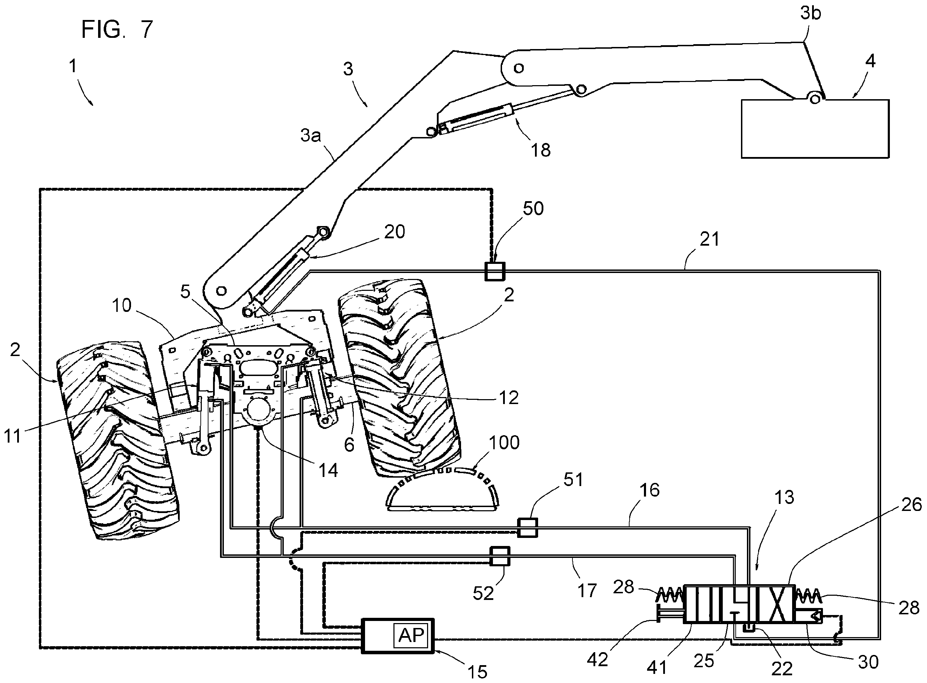

La figure 7 représente un système de stabilisation selon une autre forme de réalisation, dans laquelle la plupart des éléments déjà décrits se retrouvent également de façon identique ou similaire et sont désignés par les mêmes références numériques que précédemment.

Dans ce cas, l'engin 1 est conçu de telle sorte que le bras 3 soit interchangeable, afin que l'engin puisse être adapté à des types de travaux différents, l'interchangement se faisant par démontage d'un bras 3 par rapport à l'embase pivotante et montage d'un autre bras 3. Cet interchangement fait que le vérin de flèche 20 associé à chaque bras est différent en termes de volume de chambre et de pression de travail.

Alternativement ou cumulativement, l'engin 1 est conçu de telle sorte que la charge 4 soit interchangeable par rapport au bras 3, par exemple un outil d'un premier type étant interchangeable avec un ou plusieurs outils d'un autre type, n'ayant pas la même masse que les autres outils, ou la charge peut varier au cours de l'utilisation de l'engin, par exemple lors un transport de grumes en forêt.

Comme visible sur la figure 7, le système de stabilisation comprend alors un premier capteur de pression 50, présent sur la conduite 21 reliant le vérin de flèche 20 du bras 3 utilisé au distributeur 13, un deuxième capteur de pression 51, présent sur la conduite 16 reliant les vérins de compensation 11, 12 au distributeur 13, et un troisième capteur de pression 52, présent sur la conduite 17 reliant les vérins de compensation 11, 12 au distributeur 13, ces différents capteurs étant reliés au calculateur 15.

Ces capteurs sont par exemple de marque Dandfoss, référence MBS120.

Le calculateur 15 comprend une fonction d'auto-apprentissage AP permettant d'établir une valeur de pression de consigne, nécessaire pour stabiliser l'engin en fonction du type de bras 3 montés sur l'engin, et donc en fonction du type de vérin de flèche 20 qui équipe ce bras, ou en fonction de la charge 4 portée par le bras.

En pratique, une fois le bras 3 et/ou la charge 4 mis en en place sur l'engin 1, le bras 3 est déployé au maximum alors que l'engin 1 est à plat puis est actionné de façon à soulever la charge 4, ce qui conduit à mettre le fluide du vérin de flèche 20 sous pression et ce qui conduit l'une des roues 2 de l'engin à se soulever du sol ; la fonction d'auto-apprentissage AP du calculateur 15 est alors activée et le distributeur 13 est commandé par le calculateur de façon à alimenter progressivement les vérins de compensation 11, 12 afin de ramener la roue 2 surélevée en contact avec le sol ; lorsque cet état de re-stabilisation de l'engin 1 sur ses roues 2 est atteint, lesdits deuxième et troisième capteurs 51, 52 détectent la pression de fluide qu'il est nécessaire d'alimenter dans les vérins de compensation 11, 12 pour obtenir cet état, et cette valeur de pression spécifique, adaptée au type de bras 3 spécifique utilisé, et/ou adaptée à la masse de la charge 4 portée par le bras, est enregistrée par le calculateur 15. Cette valeur de pression spécifique est ensuite utilisée comme valeur de consigne maximum par le calculateur 15 pour piloter le distributeur proportionnel 13 de façon à réaliser la compensation d'inclinaison de l'essieu 6 adaptée au type de bras 3 spécifique ou à la masse de la charge 4 portée par le bras 3. Le calculateur 15 va piloter les bobines du distributeur 30, 42 pour alimenter les vérins de compensation 11, 12 en vue d'atteindre une pression proportionnelle à la pression du vérin de flèche 20. Le calculateur 15 maintiendra cette proportion en établissant une recopie en temps réel.

L'engin 1 équipé du système de stabilisation ainsi conçu est donc apte à recevoir divers types de bras 3 interchangeables, ayant des vérins de flèche 20 propres à eux, et/ou des charges 4 ayant des masses différentes, et le système de stabilisation est apte à s'auto-étalonner en fonction de la pression qui existe dans le vérin de flèche 20 du bras 3 utilisé, lorsque la charge 4 est soulevée.

## Revendications

1. Système de stabilisation pour un engin (1) à roues (2) équipé d'un bras (3) porteur de charge, l'engin (1) comprenant un châssis (5), dit ci-après "châssis principal", sur lequel au moins un essieu (6) porteur de roues (2) est monté oscillant autour d'un palier (7) ; un vérin (20), dit ci-après "vérin de flèche", est associé au bras (3) porteur de charge pour régler l'inclinaison de ce bras par rapport à ce châssis principal (5) ;
le système de stabilisation comprenant :
- un châssis oscillant (10) apte à être relié audit essieu (6) en deux points de liaison situés à distance dudit palier (7), de part et d'autre de ce palier (7) et de façon symétrique à l'axe de celui-ci ; cette liaison de ce châssis oscillant (10) à l'essieu (6) fait que ce châssis oscille avec l'essieu (6) ; ledit bras (3) porteur de charge est destiné à être monté sur ce châssis oscillant (10) ;
- deux vérins (11, 12), dits ci-après "vérins de compensation", dont un relie un premier desdits points de liaison audit châssis principal (5) et l'autre relie le deuxième desdits points de liaison audit châssis principal (5) ; un premier de ces vérins de compensation (11) est situé à l'opposé du bras (3) et le deuxième de ces vérins de compensation (12) est situé du côté du bras (3) ;
- un distributeur proportionnel (13) ; la chambre supérieure du premier vérin de compensation (11) et la chambre inférieure du deuxième vérin de compensation (12) sont reliées par une même première conduite (16) à un orifice situé sur un premier côté du tiroir de ce distributeur (13), tandis que la chambre inférieure du premier vérin de compensation (11) et la chambre supérieure du deuxième vérin de compensation (12) sont reliées par une même deuxième conduite (17) à un autre orifice situé sur le premier côté du tiroir de ce distributeur (13) ; la chambre inférieure du vérin de flèche (20) est reliée à un orifice situé sur un deuxième côté du tiroir du distributeur (13), opposé audit premier côté, et un autre orifice de ce tiroir situé sur ce deuxième côté est relié à un réservoir de fluide ; le tiroir du distributeur (13) comprend une première case (25) qui, dans une première position du tiroir, met les chambres supérieures et inférieures des vérins de compensation (11, 12) en communication avec le réservoir de fluide et met la chambre inférieure du vérin de flèche (20) en arrêt d'écoulement de fluide ; le tiroir comprend une deuxième case (26) qui, dans une deuxième position du tiroir, met la chambre supérieure du premier vérin de compensation (11) et la chambre inférieure du deuxième vérin de compensation (12) en communication avec la chambre inférieure du vérin de flèche (20) et met simultanément la chambre inférieure du premier vérin de compensation (11) et la chambre supérieure du deuxième vérin de compensation (12) en communication avec le réservoir de fluide ; le distributeur (13) est associé à des moyens d'actionnement pilotés (30 ; 42) permettant de maintenir normalement le tiroir dans ladite première position, d'amener progressivement ce tiroir de ladite première position à ladite deuxième position, et de ramener progressivement ce tiroir de ladite deuxième position à ladite première position ;
**caractérisé en ce qu'**il comprend;
- un détecteur (14) d'une inclinaison de l'essieu (6), détectant une inclinaison de l'essieu (6) selon laquelle la roue (2) de l'engin (1) opposée au bras (3) est surélevée ; et
- un calculateur (15) relié d'une part à ce détecteur (14) d'inclinaison et d'autre part auxdits moyens d'actionnement pilotés (30 ; 42) du tiroir du distributeur (13) ; en cas d'inclinaison de l'essieu (6) tendant à surélever la roue (2) située du côté opposé au bras (3), le calculateur (15) pilote ces moyens d'actionnement de façon à commander le passage progressif du tiroir du distributeur (13) de ladite première position à ladite deuxième position selon l'inclinaison détectée de l'essieu (6).

2. Système de stabilisation selon la revendication 1, destiné à équiper un engin (1) conçu de telle sorte que le bras (3) que comprend cet engin (1) soit monté sur un pivot d'axe vertical permettant d'amener ce bras (3) sur l'un ou l'autre des côtés latéraux de l'engin (1), **caractérisé en ce que** :
- le système de stabilisation comprend un capteur (40) de détection de la position angulaire du bras (3) par rapport à l'engin (1), permettant de déterminer sur quel côté latéral de l'engin (1) se trouve le bras (3), ce capteur (40) étant relié au calculateur (15) ;
- le tiroir du distributeur (13) comprend une troisième case (41) permettant des mises en communication des vérins de compensation (11, 12) avec la chambre inférieure du vérin de flèche (20) et avec le réservoir (22) de fluide qui sont inversées par rapport aux mises en communication permises par ladite deuxième case (26) ; ladite deuxième case (26) est amenée en position active lorsque le bras (3) est placé sur un premier côté latéral de l'engin (1) et ladite troisième case (41) est amenée en position active lorsque le bras (3) est placé sur un deuxième côté latéral de l'engin (1), opposé au premier côté latéral de l'engin ; ces deuxième et troisième cases (26, 41) permettent donc de toujours mettre la chambre supérieure du vérin de compensation situé à l'opposé du bras et la chambre inférieure du vérin de compensation situé du côté du bras en communication avec la chambre inférieure du vérin de flèche, et de mettre simultanément les autres chambres de ces vérins de compensation à l'échappement quel que soit le côté latéral de l'engin (1) sur lequel se trouve le bras (3).

3. Système de stabilisation selon la revendication 1 ou la revendication 2, destiné à équiper un engin (1) conçu de telle sorte que le bras (3) soit interchangeable, et/ou que la charge (4) susceptible d'être portée par ce bras soit interchangeable par rapport au bras,
**caractérisé en ce que** :
- le système de stabilisation comprend un premier capteur de pression (50), présent sur ladite conduite (21) reliant au distributeur (13) le vérin de flèche (20) du bras (3) utilisé, un deuxième capteur de pression (51), présent sur ladite première conduite (16) reliant les vérins de compensation (11, 12) au distributeur (13), et un troisième capteur de pression (52), présent sur ladite deuxième conduite (17) reliant les vérins de compensation (11, 12) au distributeur (13), ces premier à troisième capteurs (50 à 52) étant reliés au calculateur (15) ; et
- ce calculateur (15) comprend une fonction d'auto-apprentissage permettant d'établir une valeur de pression de consigne, nécessaire pour stabiliser l'engin (1) en fonction du type de bras (3) montés sur l'engin (1), et donc en fonction du type de vérin de flèche (20) qui équipe ce bras, ou en fonction de la charge (4) portée par le bras (3).

4. Engin (1) à roues (2) incluant un bras (3) porteur de charge, l'engin (1) comprenant un châssis (5), dit ci-après "châssis principal", sur lequel au moins un essieu (6) porteur de roues (2) est monté oscillant autour d'un palier (7), et incluant un vérin (20), dit ci-après "vérin de flèche", associé au bras (3) porteur de charge pour régler l'inclinaison de ce bras (3) par rapport à ce châssis principal (5) ;
**caractérisé en ce qu'**il inclut également un système de stabilisation selon l'une des revendications 1 à 3.

## Patentansprüche

1. Stabilisierungssystem für eine Maschine (1) mit Rädern (2), die mit einem Lastarm (3) ausgestattet ist, wobei die Maschine (1) ein Chassis (5), im Folgenden "Hauptchassis" genannt, umfasst, auf dem mindestens eine Achse (6), die die Räder (2) trägt, um ein Lager (7) schwenkbar montiert ist; ein Stellglied (20), im Folgenden "Auslegerstellglied" genannt, ist dem Lastarm (3) zugeordnet, um die Neigung dieses Arms in Bezug auf das Hauptchassis (5) zu regulieren;
wobei das Stabilisierungssystem Folgendes umfasst
- einen Schwingrahmen (10), der mit der Achse (6) an zwei Verbindungspunkten verbunden werden kann, die sich in einem Abstand von dem Lager (7) beiderseits dieses Lagers (7) und symmetrisch zu dessen Achse befinden; diese Verbindung dieses Schwingrahmens (10) mit der Achse (6) bewirkt, dass dieser Rahmen mit der Achse (6) schwingt; der Tragarm (3) ist dazu bestimmt, an diesem Schwingrahmen (10) angebracht zu werden;
- zwei Zylinder (11, 12), im Folgenden als "Ausgleichszylinder" bezeichnet, von denen einer einen ersten der Verbindungspunkte mit dem Hauptrahmen (5) und der andere den zweiten der Verbindungspunkte mit dem Hauptrahmen (5) verbindet; ein erster dieser Ausgleichszylinder (11) befindet sich gegenüber dem Arm (3) und der zweite dieser Ausgleichszylinder (12) befindet sich auf der Seite des Arms (3);
- einen Proportionalverteiler (13); die obere Kammer des ersten Ausgleichszylinders (11) und die untere Kammer des zweiten Ausgleichszylinders (12) sind über eine gleiche erste Leitung (16) mit einer Öffnung verbunden, die sich auf einer ersten Seite des Steuerkolbens dieses Verteilers (13) befindet, während die untere Kammer des ersten Ausgleichszylinders (11) und die obere Kammer des zweiten Ausgleichszylinders (12) über eine gleiche zweite Leitung (17) mit einer weiteren Öffnung verbunden sind, die sich auf der ersten Seite des Steuerkolbens dieses Verteilers (13) befindet; die untere Kammer des Auslegerzylinders (20) mit einem Anschluss auf einer zweiten Seite des Steuerkolbens des Schieberventils (13) verbunden ist, die der ersten Seite gegenüberliegt, und ein weiterer Anschluss dieses Steuerkolbens auf dieser zweiten Seite mit einem Fluidreservoir verbunden ist; das Steuerventil (13) eine erste Kammer (25) umfasst, die in einer ersten Stellung des Steuerventils die obere und die untere Kammer des Ausgleichszylinders (11, 12) mit dem Fluidreservoir verbindet und die untere Kammer des Auslegerzylinders (20) am Fluidfluss hindert; der Schieber ein zweites Abteil (26) umfasst, das in einer zweiten Stellung des Schiebers die obere Kammer des ersten Ausgleichszylinders (11) und die untere Kammer des zweiten Ausgleichszylinders (12) mit der unteren Kammer des Auslegerzylinders (20) in Verbindung bringt und gleichzeitig die untere Kammer des ersten Ausgleichszylinders (11) und die obere Kammer des zweiten Ausgleichszylinders (12) mit dem Fluidreservoir in Verbindung bringt; der Verteiler (13) mit gesteuerten Betätigungsmitteln (30; 42) verbunden ist, um den Schieber normalerweise in der ersten Position zu halten, um diesen Schieber schrittweise von der ersten Position in die zweite Position zu bringen und um diesen Schieber schrittweise von der zweiten Position in die erste Position zurückzubringen;
**dadurch gekennzeichnet, dass** es umfasst;
- einen Detektor (14) zur Erfassung einer Neigung der Achse (6), der eine Neigung der Achse (6) erfasst, mit der das Rad (2) der Maschine (1) gegenüber dem Arm (3) angehoben wird; und
- einen Datenrechner (15), der einerseits mit diesem Neigungsdetektor (14) und andererseits mit den gesteuerten Betätigungsmitteln (30; 42) der Spule des Verteilers (13) verbunden ist; und im Falle einer Neigung der Achse (6), die dazu neigt, das Rad (2) auf der dem Arm (3) gegenüberliegenden Seite anzuheben, steuert der Datenrechner (15) diese Betätigungsmittel derart, dass er den schrittweisen Übergang der Spule des Verteilers (13) von der genannten ersten Position in die genannte zweite Position in Abhängigkeit von der festgestellten Neigung der Achse (6) steuert.

2. Stabilisierungssystem nach Anspruch 1, das dazu bestimmt ist, eine Maschine (1) auszurüsten, die so konstruiert ist, dass der Arm (3), den diese Maschine (1) umfasst, auf einem Drehpunkt mit vertikaler Achse montiert ist, der es ermöglicht, diesen Arm (3) auf die eine oder andere Seite der Maschine (1) zu bringen, **dadurch gekennzeichnet, dass**:
- das Stabilisierungssystem einen Sensor (40) zur Erfassung der Winkelposition des Arms (3) in Bezug auf das Fahrzeug (1) umfasst, der es ermöglicht, zu bestimmen, auf welcher Seite des Fahrzeugs (1) sich der Arm (3) befindet, wobei dieser Sensor (40) mit dem Fahrzeug (1) verbunden ist;
- die Spule des Verteilers (13) ein drittes Abteil (41) aufweist, das Verbindungen der Ausgleichszylinder (11, 12) mit der unteren Kammer des Auslegerzylinders (20) und mit dem Fluidtank (22) ermöglicht, die in Bezug auf die durch das zweite Abteil (26) ermöglichten Verbindungen umgekehrt sind; wobei das besagte zweite Abteil (26) in die aktive Position gebracht wird, wenn der Arm (3) auf einer ersten seitlichen Seite der Maschine (1) platziert wird, und das besagte dritte Abteil (41) in die aktive Position gebracht wird, wenn der Arm (3) auf einer zweiten seitlichen Seite der Maschine (1) platziert wird, die der ersten seitlichen Seite der Maschine gegenüberliegt; diese zweiten und dritten Abteile (26, 41) erlauben daher stets, die obere Kammer des Ausgleichszylinders auf die der oberen Kammer des Ausgleichszylinders auf der gegenüberliegenden Seite des Arms und der unteren Kammer des Ausgleichszylinders auf der und die untere Kammer des Ausgleichszylinders auf der Seite des Arms, die mit der unteren Kammer des Auslegerzylinders in Verbindung steht, und um gleichzeitig die anderen Kammern dieser Ausgleichszylinder auf beiden Seiten des die untere Kammer des Ausgleichszylinders auf der Seite des Auslegers, die mit der unteren Kammer des Auslegerzylinders in Verbindung steht, zu entlüften und gleichzeitig die anderen Kammern dieser Ausgleichszylinder zu entlüften, unabhängig davon, auf welcher Seite der Maschine (1) sich der Ausleger (3) befindet.

3. Stabilisierungssystem nach Anspruch 1 oder Anspruch 2, zum Anbau an eine Maschine (1), die so konstruiert ist, dass der Arm (3) austauschbar ist, und/oder dass die Last (4), die von diesem Arm getragen werden kann, in Bezug auf den Arm austauschbar ist in Bezug auf den Arm,
**dadurch gekennzeichnet, dass** :
- das Stabilisierungssystem einen ersten Drucksensor (50) umfasst, der auf der Leitung (21) vorhanden ist, die den Auslegerzylinder (20) des verwendeten Arms (3) mit dem Ventil (13) verbindet, einen zweiten Drucksensor (51), der auf der ersten Leitung (16) vorhanden ist, die die Ausgleichszylinder (11, 12) mit dem Ventil (13) verbindet, und einen dritten Drucksensor (52), der auf der zweiten Leitung (17) vorhanden ist, die die Ausgleichszylinder (11, 12) mit dem Ventil (13) verbindet die Ausgleichszylinder (11, 12) zum Verteiler (13), diese ersten bis dritten Sensoren (50 bis 52), die mit dem Computer (15) verbunden sind; und
- der Datenrechner (15) über eine Selbstlernfunktion verfügt, die es ermöglicht, einen Drucksollwert festzulegen, der erforderlich ist, um die Maschine (1) in Abhängigkeit von der Art der an der Maschine (1) montierten Arme (3) und somit in Abhängigkeit von der Art des Zylinders (2) zu stabilisieren nach dem Typ der an der Maschine (1) montierten Arme (3) und somit nach dem Typ des an diesem Arm montierten Auslegerzylinders (20), oder (20), die an diesem Arm angebracht ist, oder nach der Last (4), die der Arm (3) trägt.

4. Maschine (1) mit Rädern (2), die einen Tragarm (3) aufweist, wobei die Maschine (1) ein Chassis (5), im folgenden "Hauptchassis" genannt, aufweist, auf dem mindestens eine Achse (6), die die Räder (2) trägt, um ein Lager (7) schwenkbar gelagert ist, und einen Heber (20), im folgenden "Auslegerheber" genannt, aufweist, der mit dem Tragarm (3) verbunden ist, um die Neigung dieses Arms (3) in Bezug auf das Hauptchassis (5) zu regeln;
**dadurch gekennzeichnet, dass** sie auch ein Stabilisierungssystem nach einem der folgenden Standards umfasst der Ansprüche 1 bis 3.

## Claims

1. Stabilization system for a machine (1) with wheels (2) equipped with a load-bearing arm (3), the machine (1) comprising a chassis (5), hereinafter referred to as the "main chassis", on which at least one axle (6) bearing wheels (2) is mounted so that it can oscillate about a bearing (7); a cylinder (20), hereinafter referred to as a "boom cylinder", is associated with the load-bearing arm (3) in order to adjust the inclination of this arm with respect to this main chassis (5); the stabilization system comprising :
- an oscillating frame (10) capable of being connected to the said axle (6) at two connection points situated at a distance from the said bearing (7), on either side of this bearing (7) and symmetrically to the axis of the latter; this connection of this oscillating frame (10) to the axle (6) causes this frame to oscillate with the axle (6); the said load-carrying arm (3) is intended to be mounted on this oscillating frame (10);
- two cylinders (11, 12), hereinafter referred to as "compensation cylinders", one of which connects a first of said connection points to said main frame (5) and the other connects the second of said connection points to said main frame (5); a first of these compensation cylinders (11) is located opposite the arm (3) and the second of these compensation cylinders (12) is located on the side of the arm (3);
- a proportional distributor (13); the upper chamber of the first compensating cylinder (11) and the lower chamber of the second compensating cylinder (12) are connected by the same first line (16) to a port on a first side of the spool of this distributor (13), while the lower chamber of the first compensating cylinder (11) and the upper chamber of the second compensating cylinder (12) are connected by the same second line (17) to another port on the first side of the spool of this distributor (13) ; the lower chamber of the boom cylinder (20) is connected to an orifice located on a second side of the spool of the distributor (13), opposite the said first side, and another orifice of this spool located on this second side is connected to a fluid reservoir; the spool of the distributor(13) includes a first compartment (25) which, in a first position of the spool, places the upper and lower chambers of the compensating cylinders (11, 12) in communication with the fluid reservoir and places the lower chamber of the boom cylinder (20) in fluid flow arrest; the spool comprises a second compartment (26) which, in a second position of the spool, places the upper chamber of the first compensating cylinder (11) and the lower chamber of the second compensating cylinder (12) in communication with the lower chamber of the boom cylinder (20) and simultaneously places the lower chamber of the first compensating cylinder (11) and the upper chamber of the second compensating cylinder (12) in communication with the fluid reservoir; the distributor (13) is associated with controlled actuating means (30; 42) for normally maintaining the spool in said first position, for progressively bringing this spool from said first position to said second position, and for progressively bringing this spool from said second position to said first position;
**characterized in that** it comprises:
- a detector (14) of an inclination of the axle (6), detecting an inclination of the axle (6) at which the wheel (2) of the machine (1) opposite to the arm (3) is raised; and
- a computer (15) connected on the one hand to this inclination detector (14) and on the other hand to the said controlled actuating means (30; 42) of the spool of the distributor (13); in the event of an inclination of the axle (6) tending to raise the wheel (2) located on the side opposite the arm (3), the computer (15) controls these actuating means so as to command the gradual passage of the spool of the distributor (13) from the said first position to the said second position according to the detected inclination of the axle (6)

2. Stabilization system according to claim 1, intended to equip a machine (1) designed in such a way that the arm (3) which this machine (1) comprises is mounted on a pivot with a vertical axis allowing this arm (3) to be brought onto one or other of the lateral sides of the machine (1), **characterized in that**:
- the stabilization system comprises a sensor (40) for detecting the angular position of the arm (3) relative to the vehicle (1), making it possible to determine on which lateral side of the vehicle (1) the arm (3) is located, this sensor (40) being connected to the computer (15),
- the stabilization system comprises a sensor (40) for detecting the angular position of the arm (3) relative to the vehicle (1), making it possible to determine on which lateral side of the vehicle (1) the arm (3) is located, this sensor (40) being connected to the computer (15);
- the spool of the distributor (13) comprises a third compartment (41) allowing connections of the compensation cylinders (11, 12) with the lower chamber of the boom cylinder (20) and with the fluid reservoir (22) which are reversed with respect to the connections allowed by the said second compartment (26), said second box (26) is brought into active position when the arm (3) is placed on a first lateral side of the machine (1) and said third compartment (41) is brought into active position when the arm (3) is placed on a second lateral side of the machine (1) opposite to the first lateral side of the machine, these second and third compartments (26, 41) thus make it possible to always put the upper chamber of the compensation cylinder located opposite the arm and the lower chamber of the compensation cylinder located on the side of the arm in communication with the lower chamber of the boom cylinder, and to simultaneously put the other chambers of these compensation cylinders to the exhaust, whatever the lateral side of the machine (1) on which the arm (3) is located

3. Stabilization system according to claim 1 or claim 2, for equipping a machine (1) designed in such a way that the arm (3) is interchangeable and/or the load (4) which can be carried by this arm is interchangeable with respect to the arm,
**characterized in that**:
- the stabilization system comprises a first pressure sensor (50), present on said line (21) connecting the boom cylinder (20) of the arm (3) in use to the distributor (13), a second pressure sensor (51), present on said first line (16) connecting the compensation cylinders (11, 12) to the distributor (13), and a third pressure sensor (52), present on said second line (17) connecting the compensation cylinders (11, 12) to the distributor (13), these first to third sensors (50 to 52) being connected to the computer (15); and
- this computer (15) comprises a self-learning function enabling a set pressure value to be established, which is necessary to stabilize the machine (1) as a function of the type of arm (3) mounted on the machine (1), and therefore as a function of the type of boom cylinder (20) which equips this arm, or as a function of the load (4) carried by the arm (3)

4. Machine (1) with wheels (2) including a load-carrying arm (3), the machine (1) comprising a chassis (5), hereinafter referred to as the "main chassis", on which at least one axle (6) carrying wheels (2) is mounted so as to oscillate about a bearing (7), and including an cylinder (20), hereinafter referred to as the "jib cylinder", associated with the load-carrying arm (3) in order to regulate the inclination of this arm (3) with respect to this main chassis (5);
**characterized in that** it also includes a stabilization system according to one of claims 1 to 3.
